# FASCICULE DE BREVET EUROPEEN

(11) **EP 3 787 864 B1**
(45) Date de publication et mention de la délivrance du brevet: **19.07.2023**
(21) Numéro de dépôt: 19728124.9
(22) Date de dépôt: 26.04.2019
(51) Int. Cl.: B29D 30/06, B29C 33/10

(54) **ELEMENT MOULANT AVEC FENTE D'EVACUATION D'AIR DIVERGENTE**
FORMSTÜCK ELEMENT MIT DIVERGIERENDER ENTLÜFTUNGSÖFFNUNG
MOULDING ELEMENT WITH DIVERGENT AIR DISCHARGE SLOT

(30) Priorité: 30.04.2018 FR 1800393
(43) Date de publication de la demande: 10.03.2021
(73) Titulaire: Compagnie Générale des Etablissements Michelin, 63000 Clermont-Ferrand (FR)
(72) Inventeur: CALVEL, Romain, 63040 Clermont-Ferrand Cedex 09 (FR); LESMARIE, Michel, 63040 Clermont-Ferrand Cedex 09 (FR)
(74) Mandataire: Roussy, Delphine
(86) Numéro de dépôt international: PCT/IB2019/053448
(87) Numéro de publication internationale: WO 2019/211710

(56) Documents cités:
- EP-A1- 2 669 078
- EP-A2- 0 209 505
- EP-A2- 0 753 419
- EP-B1- 1 361 042
- GB-A- 1 166 182
- US-A- 5 066 209

## Description

### DOMAINE TECHNIQUE DE L'INVENTION

**La** présente invention concerne un élément moulant destiné à être assemblé dans un moule pour le moulage de la partie extérieure de la bande de roulement d'un pneumatique, ledit élément moulant comprenant une surface de moulage pourvue de motifs destinés au moulage de la bande de roulement et au moins une fente pour l'évacuation d'un flux d'air de l'intérieur vers l'extérieur du moule.

### ETAT DE LA TECHNIQUE ANTERIEURE

Lors du processus de moulage et de vulcanisation des pneumatiques, les effets combinés de la pression, de la température et des réactions chimiques en cours génèrent une certaine quantité de gaz qui doit être libérée du moule pendant le moulage. Pour mettre en place des moyens d'évacuation des gaz, les industriels utilisent en général une solution consistant à utiliser des moules dont la couronne externe comporte des petits trous formant une pluralité des tunnels d'évacuation répartis sur la circonférence du moule. Cette approche est certes efficace pour assurer le passage des gaz, mais produit à la surface de la bande de roulement des picots, de forme correspondante au profil des trous, formés par le mélange caoutchoutique qui a tendance à fluer dans les ouvertures d'éventation. Ces picots, disséminés sur la périphérie de la bande de roulement et souvent sur une portion des flancs du pneumatique, affectent l'esthétique du produit final et perdurent tant et aussi longtemps que le pneumatique n'a pas roulé un certain nombre de kilomètres. Pour éviter la présence de ces picots, les industriels recherchent depuis longtemps une solution pour permettre le flux d'air ou de gaz vers l'extérieur du moule, sans toutefois dégrader l'aspect final du produit nouvellement moulé.

Le document US5059380 décrit un exemple de solution permettant une ventilation du moule avec formation de picots. Le moule décrit comprend une pluralité d'inserts prévus pour permettre le passage de l'air lors du moulage. Pendant le moulage, le mélange caoutchoutique peut fluer et s'introduire dans les inserts, formant ainsi des picots à la surface de la bande de roulement.

Le document EP1361042 décrit un moule pour pneumatique comportant une couronne périphérique feuilletée. Cette couronne est constituée par un empilage dans la direction circonférentielle d'une pluralité de tôles de faible épaisseur. Des découpes réparties sur plusieurs tôles adjacentes augmentent le potentiel d'éventation du moule. Ce mode de réalisation est efficace pour un moule feuilleté uniquement. D'autres moules de vulcanisation de pneumatiques sont décrits dans les demandes EP 0 753 419 A2 et EP 2 669 0781 A1.

Il existe donc un besoin pour un moule favorisant l'évacuation de l'air pendant le moulage, mais sans affecter l'esthétique du pneumatique moulé.

Pour pallier ces différents inconvénients, l'invention prévoit différents moyens techniques.

### EXPOSE DE L'INVENTION

Tout d'abord, un premier objet de l'invention consiste à prévoir un élément moulant pour le moulage de la partie extérieure de la bande de roulement d'un pneumatique permettant l'évacuation de l'air libéré lors des phases de vulcanisation, sans formation de picots à la surface de la bande de roulement.

Un autre objet de l'invention consiste à prévoir un élément moulant pour le moulage de la partie extérieure de la bande de roulement d'un pneumatique permettant de contrôler le niveau de fluage du mélange élastomère dans les fentes d'évacuation d'air afin de générer des micro-sculptures.

Pour ce faire, l'invention selon la revendication 1 prévoit un élément moulant destiné à être assemblé dans un moule pour le moulage d'un pneumatique, ledit élément moulant comprenant une surface de moulage et une surface externe, des moyens d'éventation pour l'évacuation d'un flux d'air de la surface de moulage vers la surface externe, lesdits moyens d'éventation comprenant une première partie débouchant sur la surface de moulage et une deuxième partie en communication fluidique avec la première partie et débouchant sur la surface externe, la première partie desdits moyens d'éventation comprenant au moins un secteur divergent, le profil divergent étant orienté vers la surface externe, et la largeur minimale L1 de ladite première partie est inférieure à 0,07mm et plus préférentiellement inférieure à 0,05mm.

**Une** telle architecture permet, lors de la phase de vulcanisation d'un pneumatique, l'évacuation de l'air libéré dans le moule vers l'extérieur du moule, sans formation de « picots » comme dans les moules traditionnels. L'esthétisme des sculptures de la bande de roulement moulée n'est pas dégradé. Par ailleurs, l'accès au moyen d'éventation est facilité, par exemple pour des opérations de nettoyage de l'élément moulant, en particulier au niveau des fentes de l'élément moulant. Le secteur divergent facilite l'évacuation de l'air vers l'extérieur du moule.

Par « moyen d'éventation », on entend un tunnel étroit permettant l'évacuation de l'air vers l'extérieur du moule lors de la phase de vulcanisation, l'agencement et les dimensions du tunnel étant adaptés pour éviter que le mélange caoutchoutique en cours de moulage ne puisse obturer le tunnel.

La largeur « L1 » est suffisamment faible pour créer une restriction à travers laquelle le mélange élastomère ne peut pas passer. Une telle barrière permet d'éviter le passage du mélange élastomère dans le moyen d'éventation. La finition de la surface externe du pneumatique moulé atteint ainsi un haut niveau qualitatif.

Selon un mode de réalisation avantageux, la première partie desdits moyens d'éventation comprend un secteur droit agencé entre ledit secteur divergent et ladite deuxième partie.

Selon un autre mode de réalisation avantageux, la première partie desdits moyens d'éventation comprend un secteur convergent agencé entre ledit secteur divergent et ladite deuxième partie.

**De** manière avantageuse, la première partie forme une fente allongée sur la surface de moulage.

La fente permet l'évacuation de l'air hors de la zone de moulage. L'air peut s'écouler dans les fentes dans le sens indiqué par la flèche «sens d'évacuation de l'air».

Selon un mode de réalisation avantageux, ladite deuxième partie est constituée d'une cavité cylindrique. La cavité peut être coaxiale ou non à un plan F-F de la fente.

Selon un autre mode de réalisation avantageux, ladite deuxième partie forme une rainure sur la surface externe, ladite rainure s'étendant sur tout ou partie de la longueur de la fente allongée. La rainure peut être coaxiale ou non au plan F-F de la fente.

Du fait que le procédé de mise en oeuvre de la première partie est en général efficace jusqu'à environ 3mm d'épaisseur, il est avantageux de prévoir un autre mode de mise en oeuvre pour la deuxième partie, depuis l'extérieur du moule. Ainsi, la cavité ou la rainure de la deuxième partie facilitent la réalisation d'un moyen d'éventation traversant tout l'élément moulant, difficile à réaliser en effectuant un perçage unique depuis l'intérieur de l'élément moulant, en particulier pour de faibles largeurs de fentes.

Selon un mode de réalisation avantageux, ladite première partie comprend deux parois opposées, au moins une portion d'au moins une desdites parois opposées étant inclinée d'un angle α par rapport à un plan F-F du moyen d'éventation de façon à former ledit secteur divergent, l'angle α étant supérieur à 5° et plus préférentiellement supérieur à 10° et encore plus préférentiellement supérieur à 20° par rapport audit plan F-F.

Selon un autre mode de réalisation avantageux, ladite première partie comprend deux parois opposées, au moins une portion d'au moins une desdites parois opposées étant inclinée d'un angle β par rapport au plan F-F du moyen d'éventation de façon à former ledit secteur divergent, l'angle β étant supérieur à 5° et plus préférentiellement supérieur à 10° et encore plus préférentiellement supérieur à 20° par rapport audit plan F-F.

Selon les modes de réalisation mis en oeuvre, les angles α et β sont identiques ou différents.

De manière avantageuse, la profondeur P de la première partie est inférieure ou égale à 3mm.

Egalement de manière avantageuse, la largeur maximale L1', de ladite première partie est inférieure à la largeur L2 de la deuxième partie.

Selon un mode de réalisation avantageux, la largeur L1 de la première partie est prévue entre 0,03 et 0,07mm.

Selon l'invention, la largeur L2 de la deuxième partie se situe entre 1mm et 5mm et plus préférentiellement entre 2mm et 3mm.

L'invention prévoit également un moule pour pneumatique, comprenant une pluralité d'éléments moulants tels que préalablement décrits.

### DESCRIPTION DES FIGURES

Tous les détails de réalisation sont donnés dans la description qui suit, complétée par les figures 1 à 5, présentées uniquement à des fins d'exemples non limitatifs, et dans lesquelles :
- la figure 1a est une vue en coupe d'une représentation schématique d'un exemple d'une portion d'un élément moulant avec un moyen d'éventation ;
- la figure 1b est une vue depuis la surface de moulage de l'élément moulant de la figure 1a ;
- la figure 2 est une variante de réalisation de l'élément moulant de la figure 1a ;
- la figure 3 est une autre variante de réalisation l'élément moulant de la figure 1a ;
- la figure 4a est une vue en perspective d'une représentation schématique d'un exemple d'une portion d'un élément moulant avec un moyen d'éventation ;
- la figure 4b est une variante de réalisation de l'élément moulant de la figure 4a ;
- la figure 5 est une vue depuis la surface de moulage une variante d'un exemple de moyen d'éventation.

### DESCRIPTION DETAILLEE DE L'INVENTION

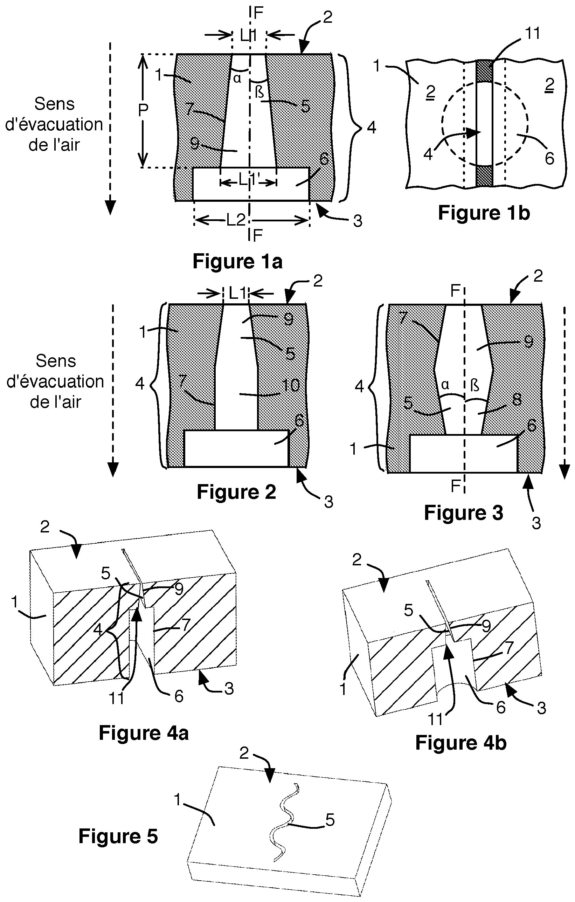

**La** figure 1a illustre une portion d'un élément moulant 1 destiné à être placé dans un moule afin de structurer la bande de roulement d'un pneumatique lors de la phase de moulage. L'élément moulant comprend une surface de moulage 2 de bande de roulement prévue pour mouler la bande de roulement, et une surface externe 3 disposée à l'opposé de la surface de moulage 2. Dans l'exemple, l'élément moulant 1 comprend un moyen d'éventation 4. Le moyen d'éventation permet d'évacuer l'air présent dans le moule lors de la phase de moulage. L'évacuation se fait depuis l'intérieur du moule, vers la surface externe du moule 3, dans le sens de la flèche illustrée aux figures 1a, 2 et 3. Tel qu'illustré à la figure 1a, le moyen d'éventation 4 comporte une première partie 5 en communication fluidique avec la surface de moulage 2. Une deuxième partie 6 est en communication fluidique avec la surface externe 3 du moule. Les deux parties sont au moins partiellement alignées l'une avec l'autre de façon à permettre le passage du flux d'air à évacuer du moule. Dans les exemples illustrés, la première partie 5 et la deuxième partie 6 sont coaxiales par rapport à un plan F-F. Le plan F-F passe par le centre de la première partie 5 et par le centre de la deuxième partie 6.

**La** première partie 5 comporte des parois 7 inclinées de telle sorte qu'elles divergent vers la deuxième partie 6, formant un secteur divergent 9. Les parois 7 opposées sont inclinées d'un angle α et d'un angle β par rapport au plan F-F. L'angle α est supérieur à 5° et plus préférentiellement supérieur à 10° et encore plus préférentiellement supérieur à 20° par rapport au plan F-F du moyen d'éventation 4. L'angle β est supérieur à 5° et plus préférentiellement supérieur à 10° et encore plus préférentiellement supérieur à 20° par rapport au plan F-F dudit moyen d'éventation 4. En variante, les angles α et β sont identiques.

**La** profondeur P de la première partie 5 est inférieure ou égale à 5mm et plus préférentiellement inférieure à 3mm. Une telle profondeur permet de réaliser la première partie à l'aide de procédés d'usinage tels que le laser guidé dans un jet d'eau. Un tel procédé permet de mettre en oeuvre des fentes très minces. En effet, la largeur maximale L1' de la première partie 5 est comprise entre 0,03mm et 0,07mm.

La largeur maximale L1' de la première partie 5 est inférieure à la largeur L2 de la deuxième partie 6. La largeur L2 de la deuxième partie 6 est comprise entre 1mm et 5mm, et plus préférentiellement entre 2mm et 3mm.

La figure 1b illustre le moyen d'éventation 4 vu depuis la surface de moulage 2. La première partie 5 forme une fente allongée. Cette fente peut être sensiblement rectiligne, et/ou courbée, et/ou ondulée telle qu'illustrée dans l'exemple de la figure 5, et/ou en ligne brisée et/ou autre. Au moins une portion de cette fente est en communication fluidique avec la deuxième partie 6, afin de permettre le passage du flux d'air vers l'extérieur du moule. Dans l'exemple de la figure 1b, le moyen d'éventation 4 et la deuxième partie 6 sont coaxiaux.

Les figures 2 et 3 sont des variantes du moyen d'éventation 4. La figure 2 illustre un exemple dans lequel la première partie 5 comprend un secteur divergent 9 et un secteur droit 10. Le secteur divergent 9 débouche sur la surface de moulage 2. Le secteur droit 10 est agencé entre le secteur divergent 9 et la deuxième partie 6.

Dans l'exemple de la figure 3, la première partie 5 comprend un secteur convergent 8 et un secteur divergent 9. Le secteur divergent 9 débouche sur la surface de moulage 2. Le secteur convergent 8 est agencé entre le secteur divergent 9 et la deuxième partie 6. Cette mise en oeuvre facilite l'évacuation de l'air vers la deuxième partie et l'extérieur du moule. De plus, elle permettrait en cas de fluage dans la zone divergente de limiter le fluage en zone convergente avec des largeurs de fentes différentes par exemple.

Les figures 4a et 4b montrent des coupes d'éléments de moulage avec deux modes de réalisation de la deuxième partie 6. À la figure 4a, la deuxième partie 6 est constituée d'une rainure sur tout ou partie de la première partie 5. Cette rainure permet d'offrir une plus grande ouverture pour la communication fluidique entre la première partie 5 et la deuxième partie 6. Ceci permet à l'air de s'évacuer plus facilement de la surface de moulage 2 vers la surface externe 3, comme l'indique le sens de la flèche aux figures 1a, 2 et 3. Cette rainure peut être coaxiale ou non au plan F-F de la fente. De plus, cet agencement peut permettre de réaliser tout ou partie de la fente avec un laser guidé par jet d'eau en accédant par la surface externe. Ceci est particulièrement avantageux dans le cas d'une fente divergente car celle-ci serait plus compliquée à obtenir du côté de la surface moulante.

Dans l'exemple de la figure 4b, la deuxième partie 6 comprend une ou plusieurs cavités cylindriques. Les cavités peuvent être coaxiales ou non au plan F-F de la fente.

**Ces** variantes de réalisation permettent de s'assurer de la bonne évacuation de l'air puisque la communication fluidique est assurée entre la première partie 5 et la deuxième partie 6.

### Numéros de référence employés sur les figures

| | |
|---|---|
| 1 | Élément moulant |
| 2 | Surface de moulage de bande de roulement |
| 3 | Surface externe de l'élément moulant |
| 4 | Moyens d'éventation |
| 5 | Première partie des moyens d'éventation |
| 6 | Deuxième partie des moyens d'éventation |
| 7 | Paroi |
| 8 | Secteur convergent |
| 9 | Secteur divergent |
| 10 | Secteur droit |

## Revendications

1. Élément moulant (1) destiné à être assemblé dans un moule pour le moulage d'un pneumatique, ledit élément moulant (1 ) comprenant une surface de moulage (2) et une surface externe (3), des moyens d'éventation (4) pour l'évacuation d'un flux d'air de la surface de moulage (2) vers la surface externe (3), lesdits moyens d'éventation (4) comprenant une première partie (5) débouchant sur la surface de moulage (2) et une deuxième partie (6) en communication fluidique avec la première partie (5) et débouchant sur la surface externe (3), dans lequel la première partie (5) desdits moyens d'éventation (4) comprend au moins un secteur divergent (9), le profil divergent étant orienté vers la surface externe (3), **caractérisé en ce que** la largeur minimale L1 de ladite première partie (5) est inférieure à 0,07mm et plus préférentiellement inférieure à 0,05mm, et la largeur L2 de la deuxième partie se situe entre 1 mm et 5mm et plus préférentiellement entre 2mm et 3mm.

2. Élément moulant (1) selon la revendication précédente, **caractérisé en ce que** la profondeur P de la première partie (5) est inférieure ou égale à 3mm.

3. Élément moulant (1) selon l'une quelconque des revendications 1 à 2, **caractérisé en ce que** la première partie (5) desdits moyens d'éventation (4) comprend un secteur droit (10) agencé entre ledit secteur divergent (9) et ladite deuxième partie (6).

4. Élément moulant (1) selon l'une quelconque des revendications 1 à 2, **caractérisé en ce que** la première partie (5) desdits moyens d'éventation (4) comprend un secteur convergent (8) agencé entre ledit secteur divergent (9) et ladite deuxième partie (6).

5. Élément moulant (1) selon l'une quelconque des revendications 1 à 4, **caractérisé en ce que** la première partie (5) forme une fente allongée sur la surface de moulage (2).

6. Élément moulant (1) selon l'une quelconque des revendications 1 à 4, **caractérisé en ce que** ladite deuxième partie (6) est constituée d'une cavité cylindrique.

7. Élément moulant (1) selon la revendication 5, **caractérisé en ce que** ladite deuxième partie (6) forme une rainure sur la surface externe (3), ladite rainure s'étendant sur tout ou partie de la longueur de la fente allongée.

8. Élément moulant (1) selon l'une quelconque des revendications 1 à 7, dans lequel ladite première partie (5) comprend deux parois (7) opposées, **caractérisé en ce que** au moins une portion d'au moins une desdites parois (7) opposées est inclinée d'un angle α par rapport à un plan F-F du moyen d'éventation (4) de façon à former ledit secteur divergent (9), l'angle α étant supérieur à 5° et plus préférentiellement supérieur à 10° et encore plus préférentiellement supérieur à 20° par rapport audit plan F-F.

9. Élément moulant (1) selon la revendication 8, dans lequel ladite première partie (5) comprend deux parois (7) opposées, **caractérisé en ce que** au moins une portion d'au moins une desdites parois (7) opposées est inclinée d'un angle β par rapport au plan F-F du moyen d'éventation (4) de façon à former ledit secteur divergent (9), l'angle β étant supérieur à 5° et plus préférentiellement supérieur à 10° et encore plus préférentiellement supérieur à 20° par rapport au plan F-F.

10. Moule pour pneumatique, comprenant une pluralité d'éléments moulants selon l'une quelconque des revendications 1 à 9.

## Patentansprüche

1. Formendes Element (1) zum Einbau in eine Form zur Formung eines Reifens, wobei das formende Element (1) eine Formungsfläche (2) und eine Außenfläche (3), Entlüftungsmittel (4) für die Abführung eines Luftstroms von der Formungsfläche (2) zur Außenfläche (3) umfasst, wobei die Entlüftungsmittel (4) einen ersten Abschnitt (5), der auf der Formungsfläche (2) mündet, und einen zweiten Abschnitt (6) umfassen, der mit dem ersten Abschnitt (5) in Fluidverbindung steht und auf der Außenfläche (3) mündet, wobei der erste Abschnitt (5) der Entlüftungsmittel (4) wenigstens ein divergierendes Teilstück (9) umfasst, wobei das divergierende Profil zur Außenfläche (3) hin gewandt ist, **dadurch gekennzeichnet, dass** die minimale Breite L1 des ersten Abschnitts (5) kleiner als 0,07 mm und besser noch kleiner als 0,05 mm ist und die Breite L2 des zweiten Abschnitts zwischen 1 mm und 5 mm und besser noch zwischen 2 mm und 3 mm liegt.

2. Formendes Element (1) nach dem vorhergehenden Anspruch, **dadurch gekennzeichnet, dass** die Tiefe P des ersten Abschnitts (5) kleiner als oder gleich 3 mm ist.

3. Formendes Element (1) nach einem der Ansprüche 1 bis 2, **dadurch gekennzeichnet, dass** der erste Abschnitt (5) der Entlüftungsmittel (4) ein gerades Teilstück (10) umfasst, das zwischen dem divergierenden Teilstück (9) und dem zweiten Abschnitt (6) angeordnet ist.

4. Formendes Element (1) nach einem der Ansprüche 1 bis 2, **dadurch gekennzeichnet, dass** der erste Abschnitt (5) der Entlüftungsmittel (4) ein konvergierendes Teilstück (8) umfasst, das zwischen dem divergierenden Teilstück (9) und dem zweiten Abschnitt (6) angeordnet ist.

5. Formendes Element (1) nach einem der Ansprüche 1 bis 4, **dadurch gekennzeichnet, dass** der erste Abschnitt (5) einen länglichen Spalt auf der Formungsfläche (2) bildet.

6. Formendes Element (1) nach einem der Ansprüche 1 bis 4, **dadurch gekennzeichnet, dass** der zweite Abschnitt (6) von einem zylinderförmigen Hohlraum gebildet ist.

7. Formendes Element (1) nach Anspruch 5, **dadurch gekennzeichnet, dass** der zweite Abschnitt (6) eine Rille auf der Außenfläche (3) bildet, wobei sich die Rille über die gesamte Länge oder einen Teil der Länge des länglichen Spalts erstreckt.

8. Formendes Element (1) nach einem der Ansprüche 1 bis 7, wobei der erste Abschnitt (5) zwei gegenüberliegende Wände (7) umfasst, **dadurch gekennzeichnet, dass** wenigstens ein Teilbereich wenigstens einer der gegenüberliegenden Wände (7) um einen Winkel α bezogen auf eine Ebene F-F des Entlüftungsmittels (4) geneigt ist, so dass das divergierende Teilstück (9) gebildet wird, wobei der Winkel α größer als 5° und besser noch größer als 10° und noch besser größer als 20° bezogen auf die Ebene F-F ist.

9. Formendes Element (1) nach Anspruch 8, wobei der erste Abschnitt (5) zwei gegenüberliegende Wände (7) umfasst, **dadurch gekennzeichnet, dass** wenigstens ein Teilbereich wenigstens einer der gegenüberliegenden Wände (7) um einen Winkel β bezogen auf die Ebene F-F des Entlüftungsmittels (4) geneigt ist, so dass das divergierende Teilstück (9) gebildet wird, wobei der Winkel β größer als 5° und besser noch größer als 10° und noch besser größer als 20° bezogen auf die Ebene F-F ist.

10. Reifenform umfassend eine Mehrzahl von formenden Elementen nach einem der Ansprüche 1 bis 9.

## Claims

1. Moulding element (1) intended to be assembled in a mould for moulding a tyre, said moulding element (1) comprising a moulding surface (2) and an external surface (3), venting means (4) for venting a flow of air from the moulding surface (2) toward the external surface (3), said venting means (4) comprising a first part (5) opening onto the moulding surface (2) and a second part (6) in fluidic communication with the first part (5) and opening onto the external surface (3), wherein the first part (5) of said venting means (4) comprises at least one divergent sector (9), the divergent profile being oriented toward the external surface (3), **characterized in that** the minimum width L1 of said first part (5) is less than 0.07 mm and more preferably less than 0.05 mm and the width L2 of the second part is between 1 mm and 5 mm, and more preferably between 2 mm and 3 mm.

2. Moulding element (1) according to the preceding claim, **characterized in that** the depth P of the first part (5) is less than or equal to 3 mm.

3. Moulding element (1) according to any one of Claims 1 to 2, **characterized in that** the first part (5) of said venting means (4) comprises a straight sector (10) arranged between said divergent sector (9) and said second part (6).

4. Moulding element (1) according to any one of Claims 1 to 2, **characterized in that** the first part (5) of said venting means (4) comprises a convergent sector (8) arranged between said divergent sector (9) and said second part (6).

5. Moulding element (1) according to any one of Claims 1 to 4, **characterized in that** the first part (5) forms an elongate slot on the moulding surface (2).

6. Moulding element (1) according to any one of Claims 1 to 4, **characterized in that** said second part (6) consists of a cylindrical cavity.

7. Moulding element (1) according to Claim 5, **characterized in that** said second part (6) forms a groove on the external surface (3), said groove extending over all or part of the length of the elongate slot.

8. Moulding element (1) according to any one of Claims 1 to 7, wherein first part (5) comprises two opposite walls (7), **characterized in that** at least one portion of at least one of said opposite walls (7) is inclined by an angle α with respect to a plane F-F of the venting means (4) so as to form said divergent sector (9), the angle α being greater than 5° and more preferably greater than 10°, and more preferably still greater than 20° with respect to said plane F-F.

9. Moulding element (1) according to Claim 8, wherein said first part (5) comprises two opposite walls (7), **characterized in that** at least one portion of at least one of said opposite walls (7) is inclined by an angle β with respect to the plane F-F of the venting means (4) so as to form said divergent sector (9), the angle β being greater than 5° and more preferably greater than 10°, and more preferably still greater than 20° with respect to the plane F-F.

10. Tyre mould comprising a plurality of moulding elements according to any one of the Claims 1 to 9.
